# FASCICULE DE BREVET EUROPEEN

(11) **EP 0 532 383 B1**
(45) Date de publication et mention de la délivrance du brevet: **03.04.1996**
(21) Numéro de dépôt: 92402386.4
(22) Date de dépôt: 02.09.1992
(51) Int. Cl.: H04B 7/26, H04B 7/005

(54) **Procédé et dispositif pour la transmission simultanée d'information entre des mobiles et une station de réception**
Verfahren und Anordnung zur gleichzeitiger Nachrichtenübertragung zwischen beweglichen Einheiten und einer Empfangstation
Method and device for simultaneous information transmission between mobiles and a reception station

(30) Priorité: 05.09.1991 FR 9110965
(43) Date de publication de la demande: 17.03.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Le Garrec, Guy, F-95110 Sannois (FR); Sebilet, Bruno Roger, F-92500 Rueil Malmaison (FR)

(56) Documents cités:
- EP-A- 0 166 911
- EP-A- 0 411 878
- WO-A-90/04293
- WO-A-91/07036

## Description

La présente invention concerne un procédé de transmission d'information en temps réel entre plusieurs mobiles et une station de réception. L'invention se rapporte également à un dispositif pour la mise en oeuvre de ce procédé.

Il est connu pour réaliser une transmission d'information entre différents émetteurs mobiles et un récepteur fixe ou mobile de recourir aux procédés classiques de multiplexage temporel ou fréquentiel. Toutefois, en accordant à chaque mobile un intervalle de temps pendant lequel il est seul en relation avec la station de réception, le multiplexage temporel interdit pendant cet intervalle de temps la réception d'information en provenance des autres émetteurs. De même, en nécessitant l'utilisation d'autant de fréquences différentes que de mobiles, le multiplexage fréquentiel implique le recours à des matériels complexes, notamment au niveau des antennes, tout en provoquant un encombrement hertzien important.

Il est connu, par ailleurs, pour autoriser l'émission simultanée de plusieurs mobiles de recourir aux techniques d'étalement de spectre par séquence directe ou pseudo-bruit dans lesquelles chaque mobile est caractérisé par la fonction de corrélation qui lui est affectée selon le principe de l'accès multiple par répartition de codes (AMRC). Toutefois, lorsque les mobiles sont situés à des distances extrêmement différentes, dans une plage de valeurs pouvant aller de 200m à 200km par exemple, il n'est plus possible de par la trop grande excursion de puissance existant alors au niveau du récepteur d'assurer correctement la réception des informations en provenance de chacun de ces mobiles.

Il existe différents systèmes de transmission qui permettent de sélectionner des niveaux de puissance différents suivant la localisation de l'émetteur. Dans le brevet WO-A 9004293 la sélection est effectuée par commutation entre deux modes de fonctionnement correspondant à deux bandes de fréquence différentes et deux valeurs de puissance d'émission différentes suivant que l'émetteur se trouve en zone urbaine ou en zone rurale. Dans le brevet EP-A-0411878 la sélection est effectuée en choisissant parmi un ensemble discret de niveaux de puissance possibles, la puissance d'émission la plus appropriée. Cependant, ces systèmes de transmission ne permettant que des choix de niveaux de puissances prédéterminés et discrets, ne permettent pas d'assurer correctement la réception des informations émises par plusieurs mobiles quelle que soit la localisation de ces mobiles par rapport à la station de réception.

La présente invention a pour but de pallier les inconvénients précédents et de permettre une transmission simple et simultanée d'information entre des mobiles et une station de réception et cela quelle que soit la localisation de ceux-ci par rapport à la station de réception.

Ce but est atteint du fait que conformément à l'invention le procédé consiste,
- à déterminer au niveau de chaque mobile, le bilan de la liaison mobile-station de réception à partir d'une information de position indiquant la distance séparant le mobile de la station de réception, laquelle distance est fournie par un système de localisation interne au mobile, mais externe à cette liaison mobile-station de réception,
- à réguler, au niveau de chaque mobile, le niveau de la puissance émise par le mobile en fonction du bilan de la liaison mobile-station de réception et de façon que le niveau de la puissance reçue par la station de réception soit quasiment constant.

Ce système de localisation peut être le système global de maintien en position dit GPS.

Il est clair qu'avec le procédé selon l'invention la puissance reçue au niveau de la station de réception sera pratiquement toujours la même qu'elle que soit la liaison, c'est-à-dire quelle que soit la distance des différents mobiles par rapport à la station de réception. Il en résulte que cette dernière peut en être simplifiée dans sa réalisation, qu'il s'agisse de son antenne ou de ses circuits d'amplification qui pourront alors être calculés au plus juste. De même, la fourniture à l'émetteur, par un système de localisation externe à la liaison, de la distance séparant le mobile de la station de réception simplifie notablement la réalisation de cet émetteur en supprimant la nécessité d'une seconde liaison entre mobiles et station de réception alors indispensable pour véhiculer cette information de distance.

La présente invention se rapporte aussi à un dispositif pour la transmission simultanée d'information entre des mobiles et une station de réception selon la technique dite à étalement de spectre par séquence directe, chaque mobile comprenant un émetteur, dispositif selon lequel, conformément à l'invention, cet émetteur comporte un module d'amplification dont le gain est déterminé par un module de commande qui calcule le bilan de la liaison mobile-station de réception depuis une information de position fournie par un système de localisation externe à cette liaison mobile-station de réception et ainsi régule la puissance émise par le mobile de façon que le niveau de la puissance reçue par la station de réception soit quasiment constant.

D'autres caractéristiques et avantages ressortiront mieux à la lecture de la description suivante, faite à titre indicatif et non limitatif, en regard aux dessins annexés, sur lesquels :
- la figure 1 représente un synoptique général d'un dispositif conforme à l'invention ;
- la figure 2 représente un synoptique de l'émetteur d'un mobile d'un dispositif selon l'invention.

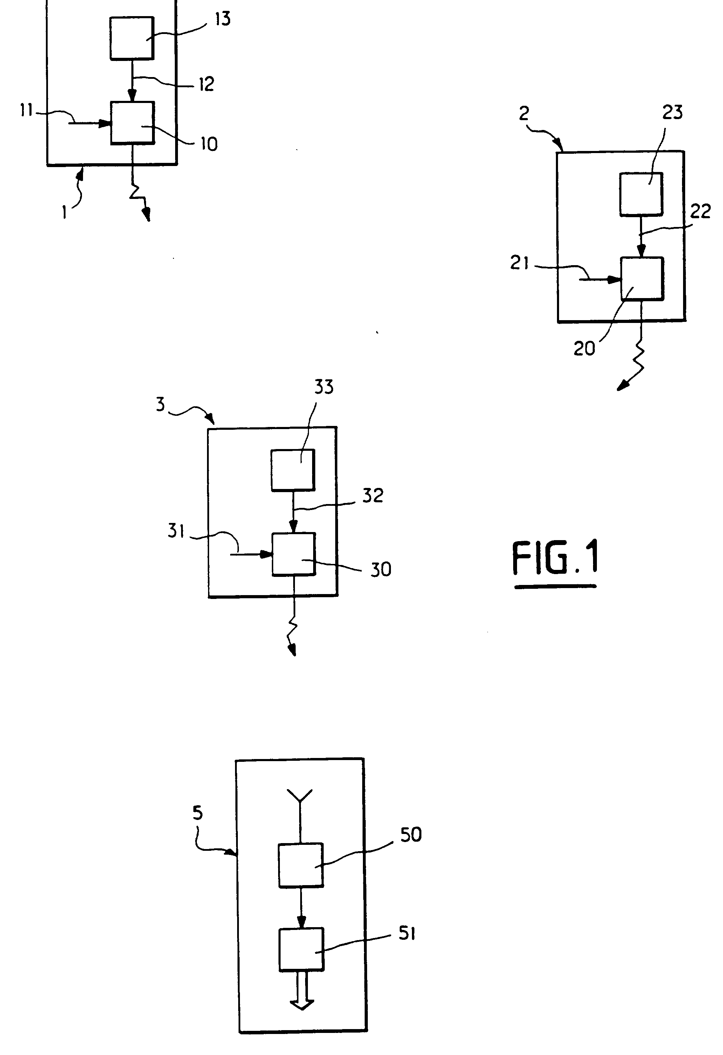

La figure 1 montre un schéma synoptique général d'un dispositif permettant d'assurer une liaison de communication entre plusieurs mobiles, par exemple 1, 2 et 3, et une station de réception 5. Il est évident que le nombre de mobiles qui est réduit à trois pour la commodité du dessin peut être beaucoup plus élevé, comme il sera montré plus avant.

Chaque mobile 1, 2, 3 comporte un émetteur 10, 20, 30 qui reçoit d'une part une information de donnée 11, 21, 31 de nature variable dépendant uniquement du type de mobile considéré et pouvant concerner, par exemple, le mobile lui-même ou son environnement et d'autre part une information de position 12, 22, 32 indiquant la distance séparant le mobile concerné de la station de réception 5. L'information de position 12, 22, 32 est avantageusement fournie par un système de localisation 13, 23, 33 interne au mobile tel que le système global de maintien en position dit GPS (Global Positioning System) ou tout autre système équivalent mais externe à la liaison mobile-station de réception.

La station de réception 5 comporte un module de réception 50 qui reçoit simultanément les signaux émis par les différents mobiles et les amplifie pour permettre leur gestion par un module de traitement 51 qui restitue alors en parallèle les informations de données 11, 21, 31 précédemment émises par chaque mobile 1, 2 et 3.

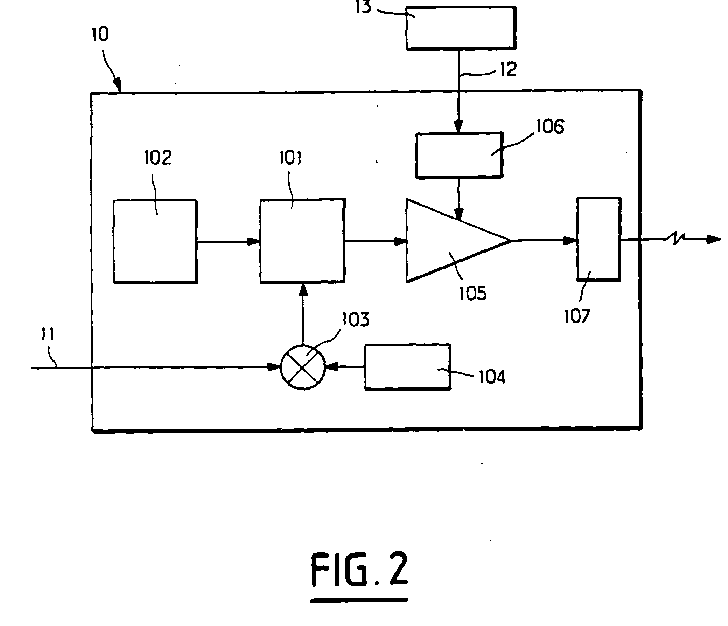

La figure 2 montre plus en détail un émetteur de l'un des mobiles 1, 2, 3.

Le signal émis par l'émetteur 10 du mobile vers la station de réception 5 provient avant amplification 105 et filtrage 107 d'un modulateur 101 qui reçoit d'une part d'un oscillateur local 102 une porteuse et d'autre part d'un mélangeur 103 le signal modulant. Le type de modulation est indifférent, il pourra s'agir d'une modulation de phase ou de fréquence et avantageusement d'une modulation de phase à deux états, par exemple une modulation 0-π.

Le mélangeur 103 qui délivre le signal modulant reçoit d'une part l'information de donnée 11 que l'on désire faire parvenir à la station de réception 5 et d'autre part un code d'étalement, distinct pour chaque mobile, généré dans l'émetteur par un générateur de code 104. Ce code d'étalement est avantageusement un code pseudo-aléatoire. Dans tous les cas, les fonctions de corrélation entre deux codes différents doivent être nulles ou quasi-nulles. La puissance du signal modulé émis est ajustée au niveau du module d'amplification 105 à partir du signal de sortie d'un module de commande 106, lequel module reçoit l'information de position 12 délivrée par le système de localisation 13, interne au mobile. Un filtre 107 est placé en sortie de l'émetteur.

La station de réception 5, qui ne sera pas décrite dans le détail, est conforme à tout récepteur fonctionnant sur le principe de l'accès multiple à répartition de codes (AMRC). Le module de traitement 51 (figure 1) comportera donc autant de corrélateurs qu'il existe de mobiles, chaque corrélateur recevant sur ses deux entrées, d'une part, le signal issu du module de réception 50 et, d'autre part, un code d'étalement identique à celui généré dans l'émetteur pour le mobile considéré. L'information de donnée initiale 11, 21, 31 sera disponible en parallèle après démodulation du signal issu de chaque corrélateur. Lorsque l'information de donnée 11, 21, 31 aura été codée préalablement à son émission, un décodage sera nécessaire en sortie du démodulateur pour retrouver l'information réellement utile.

Revenons à la figure 2. Le contrôle du niveau de la puissance émise par chaque mobile par le module d'amplification 105 permet de niveler au niveau du récepteur les différentes puissances reçues et donc de simplifier considérablement la réalisation de la station de réception. Il en résulte, par exemple, qu'un simple dipôle sur un plan masse suffira alors à constituer l'antenne de la station de réception 5. De même, le dimensionnement des différents éléments constituant la station de réception s'en trouve facilité.

La régulation de la puissance émise est réalisée en fonction du bilan de la liaison mobile-station de réception. Le bilan de liaison est un bilan énergétique qui permet de déterminer le rapport signal à bruit au niveau de la station de réception. Pour cela, il est déterminé à chaque extrémité de cette liaison le niveau tant du signal que du bruit.

Ainsi, connaissant la largeur de bande exploitée au niveau de la station de réception, il est possible d'en déduire le niveau de bruit correspondant par la formule suivante N = KTB ou K est la constante de Boltzmann, T la température et B la largeur de bande, puis, en se fixant un rapport signal (S) à bruit (N) minimal au niveau de cette station de réception et compte tenu d'un facteur de bruit déterminé, de calculer le niveau minimal du signal traitable par la station de réception. L'atténuation d'espace donnée par : A =((4πD)/λ) où λ est la longueur d'onde émise et D la distance entre le mobile et là station de réception, et les gains respectifs des antennes à l'émission et à la réception permettront alors, connaissant le niveau minimal du signal à la station de réception, la détermination de la puissance émise par le mobile.

Ces différents calculs, pour des caractéristiques déterminées des mobiles et de cette station de réception, ne dépendant que de la distance séparant le mobile de la station de réception, la connaissance de cette distance à tout instant permettra donc d'adapter le niveau de la puissance émise par le mobile, de telle sorte que le niveau de puissance reçue par la station de réception soit quasiment constant. Il faut cependant noter que des variations de quelques pour-cent sont parfaitement tolérables et il est même possible, sans dégrader les performances du système, d'accepter des différences de niveau entre les mobiles qui puissent atteindre 10 décibels.

La variation du niveau de la puissance émise est obtenue par la modification du gain du module d'amplification 105, modification élaborée à chaque instant par le module de commande 106 qui reçoit du système de localisation 13 externe à l'émetteur, et donc à la liaison mobile-station de réception, l'information de position 12, c'est-à-dire en pratique la distance entre le mobile et la station de réception, la position de la station de réception étant connue du mobile. Cette détermination de la distance peut être effectuée en utilisant, par exemple, une mémoire qui intègre les coordonnées de position de la station de réception pour les comparer à tout moment aux coordonnées transmises par le système global de maintien en position (GPS) au mobile, cette comparaison pouvant s'effectuer à l'aide d'une unité arithmétique et logique (UAL).

La distance étant connue, la puissance de l'émetteur du mobile peut alors être ajustée au niveau du module d'amplification 105 par l'utilisation par exemple d'un atténuateur programmable numériquement.

Les performances réalisées par un tel dispositif sont exceptionnelles. En effet, aux avantages classiques de la technique de l'étalement de spectre comme la résistance aux brouillages et la discrétion des transmissions, il est ajouté la simplicité des matériels. En effet, dans la plupart des cas, les émetteurs des mobiles seront de faible puissance, ce qui en limitera tant la consommation que la densité spectrale de puissance rayonnée dans la bande exploitée par le récepteur. En outre, si l'on prend pour gain de traitement, c'est-à-dire pour rapport entre la bande étalée en sortie d'émetteur et la bande exploitée par le récepteur, une valeur de 1 000 soit 30 décibels et que l'on se fixe un rapport signal à bruit au niveau du récepteur de 10 décibels (valeurs couramment admises par l'homme de l'art), il est immédiat de constater que le dispositif peut alors accepter jusqu'à 100 émetteurs simultanément (-20 décibels), valeur qui doit être comparée à 1, nombre d'émetteurs émettant "simultanément" en l'absence de correction selon l'invention.

Il est donc évident que le dispositif selon l'invention, comme le procédé qu'il sous-tend en permettant un accès permanent aux données transmises par plusieurs dizaines de mobiles quelle que soit la distance qui les sépare de la station de réception, est particulièrement adapté dans de nombreux types d'application et notamment la télémesure.

## Revendications

1. Procédé de transmission simultanée d'information entre des mobiles et une station de réception selon la technique dite à étalement de spectre par séquence directe, caractérisé en ce qu'il consiste :
- à déterminer au niveau de chaque mobile, le bilan de la liaison mobile-station de réception à partir d'une information de position indiquant la distance séparant le mobile de la station de réception, laquelle distance est fournie par un système de localisation interne au mobile, mais externe à cette liaison mobile-station de réception,
- à réguler, au niveau de chaque mobile, le niveau de la puissance émise par le mobile en fonction du bilan de la liaison mobile-station de réception et de façon que le niveau de la puissance reçue par la station de réception soit quasiment constant.

2. Procédé selon la revendication 1, caractérisé en ce que ledit système de localisation est le système global de maintien en position dit GPS.

3. Dispositif pour la transmission simultanée d'information entre des mobiles et une station de réception selon la technique dite à étalement de spectre par séquence directe, chaque mobile comprenant un émetteur (10,20,30), caractérisé en ce que cet émetteur (10,20,30) comporte un module d'amplification (105) dont le gain est déterminé par un module de commande (106) qui calcule le bilan de la liaison mobile-station de réception depuis une information de position (12,22,32) fournie par un système de localisation (12,23,33) externe à la liaison mobile-station de réception et ainsi régule la puissance émise par le mobile de façon que le niveau de la puissance reçue par la station de réception soit quasiment constant.

4. Dispositif selon la revendication 3, caractérisé en ce que ledit système de localisation (13,23,33) est le système global de maintien en position dit GPS.

## Patentansprüche

1. Verfahren zur gleichzeitigen Nachrichtenübertragung zwischen beweglichen Einheiten und einer Empfangsstation nach der sogenannten Technik der Dehnung des Spektrums durch direkte Sequenz,
dadurch gekennzeichnet,
daß es darin besteht,
- für jede bewegliche Einheit die Bilanz der Verbindung bewegliche Einheit / Empfangsstation aus einer Positionsinformation zu bestimmen, die die Distanz zwischen der beweglichen Einheit und der Empfangsstation angibt, wobei diese Distanz durch ein Positionsbestimmungssystem abgegeben wird, das sich innerhalb der beweglichen Einheit, aber außerhalb dieser Verbindung bewegliche Einheit / Empfangsstation befindet,
- für jede bewegliche Einheit die Höhe der von der beweglichen Einheit abgegebenen Leistung in Abhängigkeit von der Bilanz der Verbindung bewegliche Einheit / Empfangsstation dergestalt zu regulieren, daß die von der Empfangsstation empfangene Leistung praktisch konstant ist.

2. Verfahren nach Anspruch 1, dadurch gekennzeichnet, daß das genannte Positionsbestimmungssystem das allgemeine System zum Positionshalten, das sogenannte GPS ist.

3. Vorrichtung zur gleichzeitigen Nachrichtenübertragung zwischen beweglichen Einheiten und einer Empfangsstation nach der sogenannten Technik der Dehnung des Spektrums durch direkte Sequenz, wobei jede bewegliche Einheit einen Sender (10, 20, 30) aufweist, dadurch gekennzeichnet, daß dieser Sender (10, 20, 30) ein Verstärkermodul (105) aufweist, dessen Gewinn durch ein Steuermodul (106) bestimmt wird, das die Bilanz der Verbindung bewegliche Einheit / Empfangsstation aus einer Positionsinformation (12, 22, 32), die durch ein Positionsbestimmungssystem (13, 23, 33) abgegeben wird, das sich außerhalb der Verbindung bewegliche Einheit / Empfangsstation befindet, berechnet und auf diese Weise die von der beweglichen Einheit abgegebene Leistung dergestalt reguliert, daß die Höhe der von der Empfangsstation empfangenen Leistung praktisch konstant ist.

4. Vorrichtung nach Anspruch 3, dadurch gekennzeichnet, daß das genannte Positionsbestimmungssystem (13, 23, 33) das allgemeine System zum Positionshalten, das sogenannte GPS ist.

## Claims

1. Method of simultaneous information transmission between mobiles and a receiving station according to the technique known as spectral spreading by direct sequence, characterized in that it consists:
- in determining, within each mobile, the assessment of the mobile/receiving-station link on the basis of position information indicating the distance separating the mobile from the receiving station, which distance is supplied by a locating system internal to the mobile, but external to this mobile/receiving-station link,
- in regulating, within each mobile, the level of the power transmitted by the mobile on the basis of the assessment of the mobile/receiving-station link and in such a way that the level of the power received by the receiving station is virtually constant.

2. Method according to Claim 1, characterized in that the said locating system is the global positioning system known as GPS.

3. Device for the simultaneous transmission of information between mobiles and a receiving station according to the technique known as spectral spreading by direct sequence, each mobile comprising a transmitter (10, 20, 30), characterized in that this transmitter (10, 20, 30) includes an amplification module (105) the gain of which is determined by a control module (106) which calculates the assessment of the mobile/receiving-station link from position information (12, 22, 32) supplied by a locating system (12, 23, 33) external to the mobile/receiving-station link and thus regulates the power transmitted by the mobile so that the level of the power received by the receiving station is virtually constant.

4. Device according to Claim 3, characterized in that the said locating system (13, 23, 33) is the global positioning system known as GPS.
